# EUROPEAN PATENT APPLICATION

(11) **EP 4 799 929 A1**
(43) Date of publication of application: **02.09.2026**
(21) Application number: 25160609.1
(22) Date of filing: 27.02.2025
(51) Int. Cl.: B64D 11/00, F16B 1/00

(54) **AIRCRAFT PASSENGER SERVICE UNIT FIXING ELEMENT**

(71) Applicant: Goodrich Lighting Systems GmbH & Co. KG, 59557 Lippstadt (DE)
(72) Inventor: Pawliczek, Carsten, 59556 Lippstadt (DE); Hessling-von Heimendahl, Andre, 56073 Koblenz (DE); Jha, Anil Kumar, 59555 Lippstadt (DE); Ueberschaer, Andreas, 33330 Gütersloh (DE)
(74) Representative: Schmitt-Nilson Schraud Waibel Wohlfrom Patentanwälte Partnerschaft mbB

(57) **Abstract**

A passenger service unit fixing element (6) for releasably fixing a passenger service unit (2, figure 2) in a passenger cabin (102, figure 2) of an aircraft (100, figure 1) comprises a clamping body (7) and a locking element (30) that is rotatably arranged in the clamping body (7). The clamping body (7) comprises at least one clamp (8a, 8b), and each of the at least one clamp (8a, 8b) comprises a coupling portion (14a, 14b) for being coupled to the passenger service unit (2) and a clamping portion (12a, 12b) for being clamped to a support member (4) provided in the passenger cabin (102). The clamping portion (12a, 12b) comprises two clamp arms (16, 18) that are elastically movable with respect to each other between a clamped configuration, in which the support member (4) is clampable between the two clamp arms (16, 18), and a released configuration, in which the clamping portion (12a, 12b) is detachable from the support member (4). The locking element (30) is rotatable between a locked position, in which the locking element (30) locks the clamp arms (16, 18) in the clamped configuration, and an unlocked position, in which the locking element (30) allows the clamp arms (16, 18) to move from the clamped configuration into the released configuration.

## Description

The present invention is in the field of aircraft passenger service units. The present invention is in particular related to an aircraft passenger service unit fixing element for fixing an aircraft passenger service unit to a support member in a passenger cabin of an aircraft.

The present invention is further related to an aircraft, comprising a passenger cabin and at least one aircraft passenger service unit that is mounted to at least one support member, provided in the passenger cabin, with at least one aircraft passenger service unit fixing element. The present invention is further related to a method of fixing an aircraft passenger service unit to a support member in a passenger cabin of an aircraft, using at least one aircraft passenger service unit fixing element, and to method of releasing such a passenger service unit from the support member.

Passenger aircraft, such as commercial air planes, have a passenger cabin with passenger seats and are usually equipped with aircraft overhead passenger service units that are arranged above the passenger seats. In the following, the aircraft overhead passenger service units will be denoted more briefly as "passenger service units". Passenger service units are also known as PSUs.

Passenger service units may comprise individually switchable passenger reading lights, air gaspers for supplying fresh air to the passengers, loudspeakers and switchable visual signs. The passenger service units may further comprise oxygen masks, which may be released and activated for supplying an oxygen rich gas to the passengers in emergency situations, in particular in emergency situations which result in a loss of air pressure within the aircraft passenger cabin.

The passenger service units are installed in the passenger cabin, when the aircraft is produced. The passenger service units are typically mounted to support members that are installed in the passenger cabin above the passenger seats. The support members may, for example, include mounting rails that extend along the longitudinal extension of the passenger cabin. Aircraft passenger service unit fixing elements may be employed for mounting the passenger service units to the support members.

In order to provide the desired functionalities in a satisfactory manner, the passenger service units should be arranged at expedient positions with respect to the associated passenger seats. Consequently, it may be desired to adjust the positions of the passenger service units, when the passenger seat configuration / passenger seat map is modified and the positions of the passenger seats within the aircraft passenger cabin are changed.

It would be beneficial to facilitate a convenient installation of passenger service units and a convenient adjustment of the positions of passenger service units in the passenger cabin of an aircraft. It would in particular be beneficial to provide improved aircraft passenger service unit fixing elements for mounting passenger service units to the support members provided in a passenger cabin. Such aircraft passenger service unit fixing elements may have a low weight and may allow for an easy and secure installation and adjustment of aircraft passenger service units in an aircraft.

Exemplary embodiments of the invention include a passenger service unit fixing element, which is provided for releasably fixing a passenger service unit in a passenger cabin of an aircraft, wherein the passenger service unit fixing element comprises a clamping body and a locking element that is rotatably arranged in the clamping body. The clamping body comprises at least one clamp. Each of the at least one clamp comprises a coupling portion that is configured for being coupled to the passenger service unit, and a clamping portion that is configured for being clamped to a support member provided in the passenger cabin. The clamping portion comprises two clamp arms that are elastically movable with respect to each other between a clamped configuration and a released configuration. In the clamped configuration of the clamp arms, the support member is clampable between the two clamp arms for mounting the passenger service unit fixing element to the support member. In the released configuration of the clamp arms, the clamping portion is detachable from the support member. The locking element is rotatable between a locked position, in which the locking element locks the clamp arms in the clamped configuration, and an unlocked position, in which the locking element allows the clamp arms to move from the clamped configuration into the released configuration.

Passenger service unit fixing elements according to exemplary embodiments of the invention may allow for securely mounting and fixing aircraft passenger service units to support members, provided in the passenger cabin of an aircraft, by moving the locking element into the locked position. Passenger service unit fixing elements according to exemplary embodiments of the invention may further allow for conveniently releasing aircraft passenger service units from the support members, e.g. for replacement and/or for adjusting the positions of the aircraft passenger service units in the passenger cabin, by moving the locking element from the locked position into the unlocked position.

A passenger service unit fixing element according to an exemplary embodiment of the invention may allow for reducing the number of individual parts of the passenger service unit fixing element. Consequently, passenger service unit fixing elements according to exemplary embodiments of the invention may be manufactured and installed in an aircraft at low costs. Passenger service unit fixing elements according to exemplary embodiments of the invention may further have a low weight.

In an embodiment, the passenger service unit fixing element is made from the clamping body and the locking element only. In other words, the passenger service unit fixing element may consist of the clamping body and the locking element. It may thus be possible to provide the passenger service unit fixing element from two components only, which may contribute to a particularly convenient installation, inspection, repair, maintenance, and replacement of the passenger service unit fixing element.

The clamping body of the passenger service unit fixing element may be a one-piece structure and those elements of the clamping body that are described herein as being comprised in the clamping body may be integral parts / integral elements of the clamping body. It is possible that the clamping body is, as a whole, integrally formed, for example formed in an injection molding process.

In an embodiment, the locking element includes a locking cylinder that extends along an axis and that is rotatable around said axis between the locked position and the unlocked position. A locking cylinder may provide a convenient rotatable locking element, which may be produced and installed at comparatively low costs.

In an embodiment, the clamping portion has a v-shaped cross-section, with the two clamp arms forming the two legs of the v-shape. A clamping portion comprising two legs that are provided in a v-shaped configuration may be an effective implementation of a clamping portion with two clamp arms that are elastically movable, in particular elastically bendable, with respect to each other. The two clamp arms may also be described as elastically spreadable. In case the clamping body is an integrally formed, one-piece structure, the elastically bendable / elastically spreadable nature of the two clamp arms may be achieved via suitable material properties and suitable dimensions, in particular suitable relative dimensions at the two clamp arms with respect to the remainder of the clamping body.

In an embodiment, the locking element has its longitudinal direction of extension substantially aligned with the v-shaped configuration of the clamping portion. In particular, the locking cylinder of the locking element may be substantially aligned with a center axis between the two legs of the v-shaped configured of the clamping portion. It is further possible that the rotation of the locking element may result in an axial movement of the locking element, in particular of the locking cylinder thereof, substantially along said center axis between the two legs of the v-shaped configuration fo the clamping portion.

In an embodiment, the clamping body comprises exactly one clamp. In an alternative embodiment, the clamping body comprises a plurality of clamps, each having a respective coupling portion and a respective clamping portion. In a particular embodiment, the clamping body comprises exactly two clamps or exactly three clamps or exactly four clamps. It is also possible that the clamping body comprises one or more clamps, having a coupling portion and a clamping portions as described herein, and one or more clamps that have a different design.

In an embodiment, the clamping body comprises a lock portion that is coupled to the two clamp arms and that comprises two receptacles, formed between two parts of the lock portion. The two parts of the lock portion may be formed integrally with the two clamp arms. The locking element may comprise two locking protrusions. When the locking element is in the locked position, the two locking protrusions extend radially outwards from the locking element into the receptacles for locking the two clamp arms in the clamped configuration. When the locking element is in the unlocked position, the two locking protrusions do not extend into the receptacles, so that they do not lock the two clamp arms in the clamped configuration.

The combination of a lock portion, which is coupled to the two clamp arms, and locking protrusions, which are formed on the locking element for extending into corresponding receptacles formed in the lock portion, when the locking element is in the locked position, may provide a reliable and lightweight locking mechanism that may be operated conveniently and that may be produced at comparatively low costs.

In an embodiment, the locking element comprises at least one first inclined helical surface that is formed at an end face of the locking element. At least one matching second inclined helical surface may be formed at or in the lock portion. The at least one first inclined helical surface and the at least one second inclined helical surface may engage with each other in a configuration that causes the locking element to move along an axial direction of the locking element, when the locking element is rotated around said axial direction. Optionally, the locking element and the lock portion may comprise two or more pairs of respectively engaging first and second inclined helical surfaces.

In an embodiment, the locking element comprises an end face that is configured and positioned so that it abuts against the support member, when the passenger service unit fixing element is mounted to the support member. The end face may be configured for urging the locking element away from the support member, when the locking element is rotated from the locked position into the unlocked position

Moving the locking element along the axial direction and urging the locking element away from support member by rotating the locking element around the axial direction may facilitate a particularly convenient releasing of the passenger service unit fixing element from the support member.

In an embodiment, the end face of the locking element has the shape of a dome. Forming the end face with a dome shape may allow for reducing the friction between the support member and the end face of the locking element, when the locking element is rotated, while being pressed against the support member. Reducing the friction between the support member and the end face of the locking element may allow for a more convenient rotating of the locking element.

In an embodiment, the locking element comprises one or more spreading protrusions that extend radially from the locking element for spreading the two clamp arms from the clamped configuration into the released configuration by rotating the locking element from the locked position into the unlocked position. Spreading the two clamp arms from each other with the help of one or more spreading protrusions, which are provided on the locking element, may allow for an assisted applying of the two clamp arms to the support member and/or for an assisted releasing of the two clamp arms from the support member. The locking element may in particular comprise exactly two spreading protrusions.

In an embodiment, at least one of the two clamp arms comprises at least one guide surface that is configured / shaped so that it spreads the two clamp arms away from each other, when the clamping portion is mounted to, in particular slid onto, the support member. Providing at least one of the two clamp arms with such a guide surface may cause the two clamp arms to spread automatically, when the clamping portion is slid onto the support member. This may help in mounting the clamping portion to the support member.

In an embodiment, at least one of the two clamp arms comprises an engagement protrusion that is configured for engaging with a corresponding engagement portion of the support member, when the clamping portion is in the clamped configuration. The engagement of an engagement protrusion, which is formed on at least one of the two clamp arms, with a corresponding engagement portion, which is formed on the support member, may allow for a high mechanical strength, positive fit between the at least one clamp arm and the support member.

In an embodiment, at least one of the two clamp arms comprises a rest surface that is configured / shaped for engaging with an edge of the support member, when the clamping portion is partially engaged with the support member. The clamping portion may partially engage with the support member in an intermediate state that may occur in the course of sliding the clamping portion onto the support member and/or in the course of releasing the clamping portion from the support member. Providing at least one of the two clamp arms with a rest surface that is configured for engaging with an edge of the support member in such an intermediate state may help in establishing a well-defined intermediate state, when sliding the clamping portion onto the support member and/or when releasing the clamping portion from the support member.

In an embodiment, at least one of the two clamp arms comprises an abutment portion that abuts against a corresponding abutment portion of the support member, when the clamping portion is clamped to the support member. Providing at least one of the two clamp arms with such an abutment portion may help in establishing a well-defined position of the at least one clamp arm with respect to the support member. This may contribute to a convenient installation of the passenger service unit fixing element in a passenger cabin of an aircraft, resulting in a well-defined final mounting position. It may further result in an increased mechanical strength of the coupling between the passenger service unit fixing element and the support member.

In an embodiment, at least one of the two clamp arms comprises an S-shaped portion. The S-shaped portion may include at least one section providing a guide surface, at least one section providing an engagement protrusion, at least one section providing a rest surface, and/or at least one section providing an abutment portion. Consequently, a clamp arm comprising an S-shaped portion may provide an integrated structure that may combine two or more of the properties that have been discussed before.

In an embodiment, at least one of the two clamp arms comprises an elastic bending portion that is more flexible than other portions of the at least one of the two clamp arms. This may allow for increasing the elasticity of the at least one clamp arm and may allow for a particularly controlled deformation of the at least one clamp arm, when sliding the clamping portion onto the support member and/or when releasing the clamping portion from the support member.

In an embodiment, the elastic bending portion has a smaller cross-section than other portions of the at least one of the two clamp arm. A smaller cross-section may result in less stiffness and more elasticity of the elastic bending portion. Additionally or alternatively, the elastic bending portion may be made from another material, in particular from a more flexible material, than the other portions of the at least one of the two clamp arm.

In an embodiment, the two clamp arms form a v-shaped configuration. The v-shaped configuration may comprise a joint portion. The two clamp arms may extend separately from the joint portion and may form opposite free ends of the two clamp arms. An elastic bending portion, as its has been mentioned before, may be formed in a section of at least one of the two clamp arms. The elastic bending portion may be located between the joint portion and the free end of the respective clamp arm. The elastic bending portion may in particular be formed in a section of at least one of the two clamp arms that is adjacent to the joint portion. Alternatively or additionally, the joint portion itself may be formed as an elastic bending portion.

In an embodiment, the clamping body is formed integrally as a single element. The clamping body may be formed from a homogeneous material. Forming the clamping body as a single element, in particular from a homogeneous material, may contribute to a particularly convenient manufacturing process of the clamping body.

In an embodiment, the clamping body and the locking element are made of the same material. Manufacturing the clamping body and the locking element from the same material may also help the manufacturing process.

In an alternative embodiment, the clamping body and the locking element are made of different materials. Manufacturing the clamping body and the locking element from different materials may allow for selecting the materials for manufacturing the clamping body and the locking element based on individual specifics of the clamping body and the locking element, respectively. In other words, manufacturing the clamping body and the locking element from different materials may allow for separately optimizing the choice of the materials that are used for manufacturing the clamping body and the locking element, respectively

In an embodiment, the clamping body and/or the locking element are made of a plastic material. The clamping body and/or the locking element may, for example, be made from PEEK CF30 or from filled polyetherimide. PEEK CF30 and filled polyetherimide have been found as well suited materials for forming the clamping body and/or the locking element.

In an embodiment, the locking element comprises an axial opening for receiving a tool, for example a hexagon key, that facilitates rotating the locking element. The axial opening may, for example, have a polygonal cross-section, such as a rectangular or a hexagonal cross-section. The axial opening may be configured for receiving tools that are inserted along the axial direction of the locking element.

In an embodiment, the locking element comprises an end stop that is formed on the inner end face of the axial opening for limiting the introduction of the tool into the axial opening along the axial direction.

In an embodiment, the axial opening is defined by an elastic circumferential wall that extends along the circumferential periphery of the opening. In order to allow for liming the torque that may be applied with the tool to the locking element, the elastic circumferential wall may be configured to elastically deform, when a torque exceeding a predefined limit is exerted by the tool onto the locking element. The elastic deformation may lead to the tool losing its grip along the circumferential wall, sliding along the circumferential wall, and not being able to rotate the locking element.

In order to allow the elastic circumferential wall to deform, when a torque exceeding a predefined limit is exerted by the tool to the locking element, the locking element may comprise a groove that at least partially surrounds the elastic circumferential wall and that allows the elastic circumferential wall to deform outwards in a radial direction.

In an embodiment, the groove comprises a plurality of curved groove sections. The curved groove sections may be arranged adjacent to each other. Each curved groove section may comprise two opposing ends and a central portion between the two opposing end. The ends of each of the curved groove sections may be spaced from the central axis of the locking element by a larger distance than the central portion of the respective curved groove section. In other words, the curved groove sections may be curved in a concave manner, when viewed from the exterior of the locking element, and the curved groove sections may be curved in a convex manner, when viewed from the central axis of the main body.

In an embodiment, the groove comprises a number of curved groove sections that corresponds to a number of corners of the polygonal cross-section of the axial opening of the locking element. Each curved groove section may be arranged along a respective leg of the polygonal cross-section of the axial opening of the locking element.

As stated above, each of the at least one clamp comprises a coupling portion that is configured for coupling the clamp with a passenger service unit.

In an embodiment, a fastening opening is formed in the coupling portion. A cylindrical fastening rod, a bolt, a screw, or a similar fastening element may be introduced into the fastening opening for fixing the coupling portion to a passenger service unit. In particular, the cylindrical fastening rod, bolt, screw, or similar fastening element may be introduced into the fastening opening of the coupling portion and into a corresponding fastening opening, provided in the passenger service unit.

In an embodiment, the coupling portion may comprise a plurality of fingers, extending parallel to each other. A fastening opening may be formed in each of the fingers, respectively. The fastening openings, formed in the fingers, may be arranged coaxially with each other along a common axis. The passenger service unit may have corresponding fingers, extending in between the fingers of the coupling portion. The corresponding fingers of the passenger service unit may have corresponding fastenining openings, such that a cylindrical fastening rod, a bolt, a screw, or a similar fastening element may be introduced into the series of fastening openings of the coupling portion and the corresponding fastening openings of the passenger service unit.

Exemplary embodiments of the invention also include a passenger service unit that is mounted to at least one support member with at least one passenger service unit fixing element according to an exemplary embodiment of the invention. In further exemplary embodiments, a plurality of passenger service unit fixing elements, for example four or six passenger service unit fixing elements, may be employed for mounting the passenger service unit to the support member.

Exemplary embodiments of the invention further include an aircraft with a passenger cabin, the passenger cabin comprising at least one passenger seat; at least one support member extending above the at least one passenger seat; at least one passenger service unit that is arranged above the at least one passenger seat; and at least one passenger service unit fixing element according to an exemplary embodiment of the invention that fixes the at least one passenger service unit to the at least one support member.

An aircraft according to an exemplary embodiment of the invention may include a plurality of support members and/or a plurality of passenger service units. A plurality of passenger service unit fixing elements, for example four or six passenger service unit fixing elements, may be used for fixing each of the passenger service units to the support member(s), respectively.

Exemplary embodiments of the invention also include a method of fixing a passenger service unit to a support member provided in a passenger cabin of an aircraft. The method comprises: providing at least one passenger service unit fixing element according to an exemplary embodiment of the invention; for each of the at least one passenger service unit fixing element, coupling the passenger service unit to the coupling portion of the respective passenger service unit fixing element; for each of the at least one passenger service unit fixing element, bringing the locking element into its unlocked position; for each of the at least one passenger service unit fixing element, attaching the clamping portion of the respective passenger service unit fixing element to the support member; and, for each of the at least one passenger service unit fixing element, rotating the locking element from the unlocked position into the locked position for securely fixing the clamping portion to the support member.

Exemplary embodiments of the invention also include a method of releasing a passenger service unit that is mounted to a support member provided in a passenger cabin of an aircraft with at least one passenger service unit fixing element according to an exemplary embodiment of the invention, wherein the method comprises: for each of the at least one passenger service unit fixing element, rotating the locking element of the respective passenger service unit fixing element from the locked position into the unlocked position; and for each of the at least one passenger service unit fixing element, releasing the two clamp arms from the support member. Releasing the two clamp arms from the support member may in particular include spreading the two clamp arms from the clamped configuration into the released configuration.

The additional features, modifications and effects, as have been described herein with respect to passenger service unit fixing elements according to exemplary embodiments of the invention, are applicable to a passenger service unit, to an aircraft, and to methods according to exemplary embodiments of the invention in an analogous manner.

Further exemplary embodiments of the invention will be described with respect to the accompanying drawings, wherein:
Figure 1 depicts a schematic side view of an aircraft in accordance with an exemplary embodiment of the invention.
Figure 2 depicts a longitudinal cross-sectional view of a portion of a passenger cabin of the aircraft shown in Figure 1.
Figure 3 depicts a perspective view of a passenger service unit that is mounted to two support members by four aircraft passenger service unit fixing elements according to exemplary embodiments of the invention.
Figure 4 depicts an enlarged front view of the right front corner of the passenger service unit of Figure 3, mounted to a support member by an aircraft passenger service unit fixing element according to an exemplary embodiment of the invention.
Figure 5A depicts a perspective view of an aircraft passenger service unit fixing element according to an exemplary embodiment of the invention in an unlocked state.
Figure 5B depicts the aircraft passenger service unit fixing element, depicted in Figure 5A, in a locked state.
Figure 6 depicts an enlarged side view of a clamp of a passenger service unit fixing element according to an exemplary embodiment of the invention.
Figure 7 depicts an even further enlarged side view of the upper portion of the clamp, depicted in Figure 6, clamped to the support member.
Figure 8 depicts part of the aircraft passenger service unit fixing element, depicted in Figure 6, in an intermediate state, in which the clamping portion is partially engaged with the support member.
Figure 9A depicts a perspective view of a locking element of an aircraft passenger service unit fixing element according to an exemplary embodiment of the invention.
Figure 9B depicts a perspective view of the locking element, depicted in Figure 9A, from an opposite side.
Figure 9C depicts a cross-sectional view of the locking element, depicted in Figure 9B.
Figure 9D depicts a semi-transparent view of a part of a lock portion of a clamping body of an aircraft passenger service unit fixing element according to an exemplary embodiment of the invention.
Figures 10A depicts the clamping portion of a clamp of an aircraft passenger service unit fixing element according to an exemplary embodiment of the invention in a released state.
Figures 10B depicts the clamping portion, depicted in Figure 10A, when entering into engagement with a coupling part of a support member, but being in an unlocked state.
Figures 10C depicts the clamping portion, depicted in Figures 10A and 10B, in engagement with the coupling part of the support member and in a locked state.
Figure 11 depicts a plan view of the lock portion of a clamping body of an aircraft passenger servcie unit fixing element according to an exemplary embodiment of the invention, with the locking element arranged in the locking position.

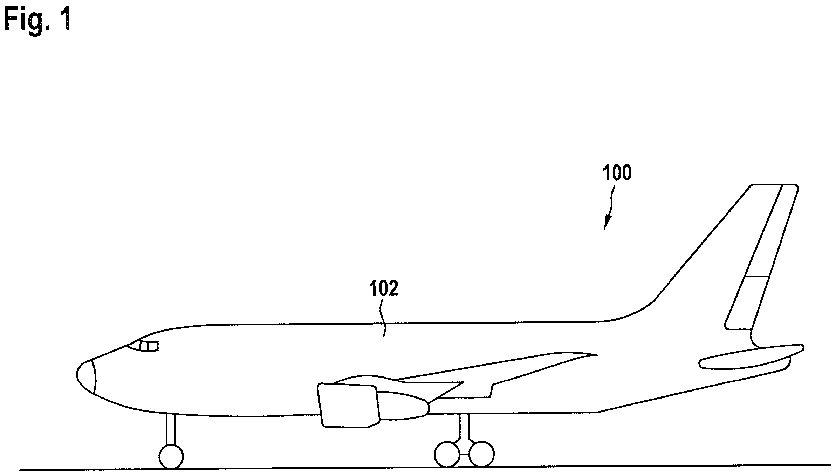

Figure 1 depicts a schematic side view of an aircraft 100 with a passenger cabin 102.

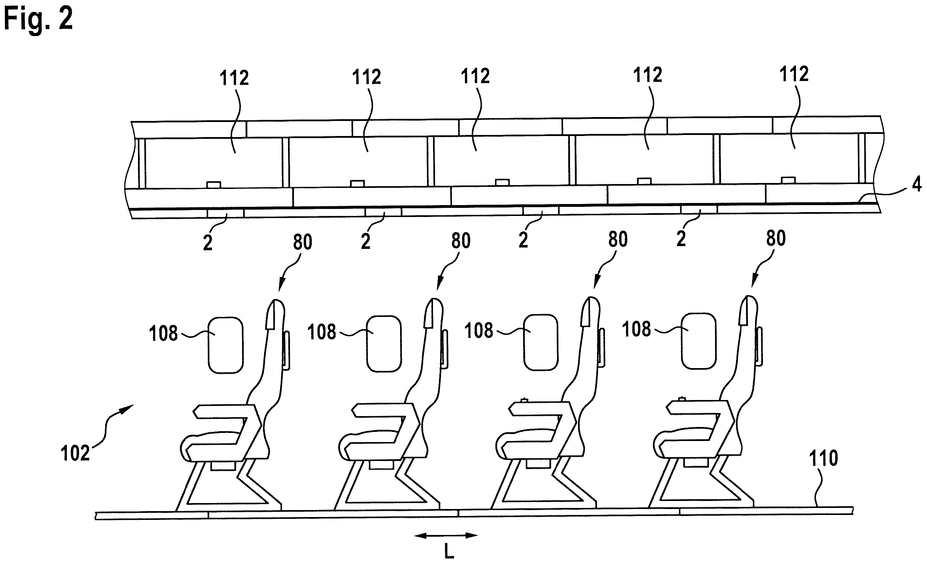

Figure 2 depicts a longitudinal cross-sectional view of a portion of the passenger cabin 102 of the aircraft 100.

Four passenger seats 80 are depicted in Figure 2. The passenger seats 80 are mounted to a floor 110 of the passenger cabin 102. Each of the depicted passenger seats 80 belongs to a different passenger seating row. Each passenger seating row may include three passenger seats 80 that are arranged next to each other along a direction that is oriented perpendicular to the longitudinal direction L. The second and third passenger seats 80 in each row are not visible in Figure 2, since they are arranged behind and therefore hidden by the depicted first passenger seats 80.

For each row of passenger seats 80, a window 108 is provided, which allows the passengers to view the outside of the aircraft 100. Further, a plurality of overhead baggage compartments 112 are shown, which provide storage space for baggage.

An aircraft overhead passenger service unit 2, also referred to herein as aircraft passenger service unit 2 or passenger service unit 2, is arranged above each row of passenger seats 80, respectively. Each passenger service unit 2 may comprise gaspers, loudspeakers, emergency oxygen masks and service call buttons, which are not shown in Figure 2.

The passenger service units 2 are mounted to and supported by support members 4 that extend along the longitudinal direction L above the passenger seats 80.

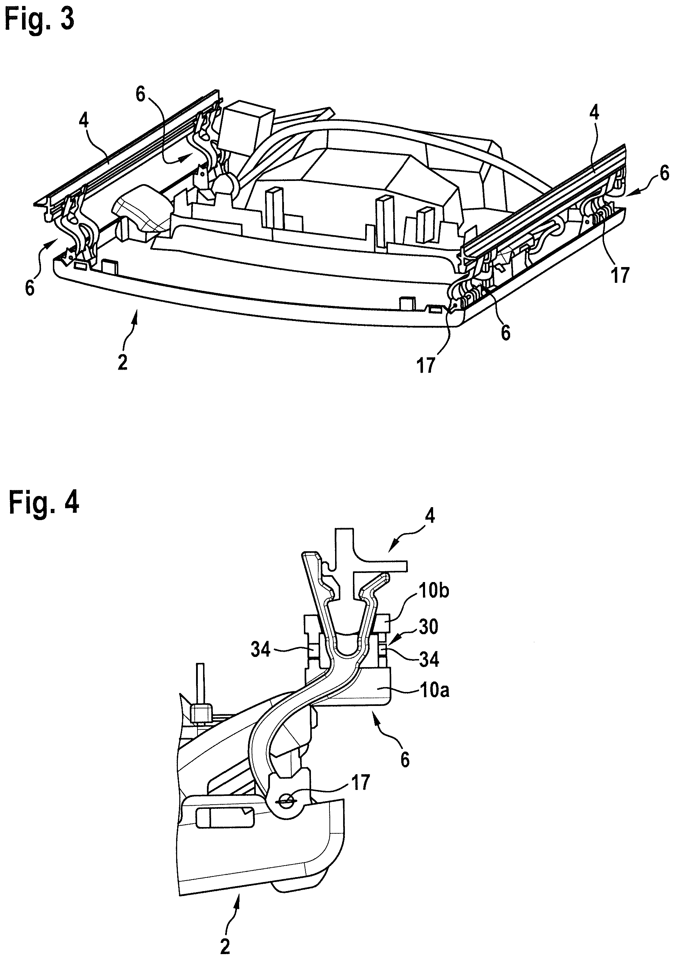

Figure 3 depicts a perspective view of a passenger service unit 2 that is mounted to two support members 4 by four aircraft passenger service unit fixing elements 6 according to exemplary embodiments of the invention.

Figure 4 depicts an enlarged front view of the right front corner of the passenger service unit 2, depicted in Figure 3.

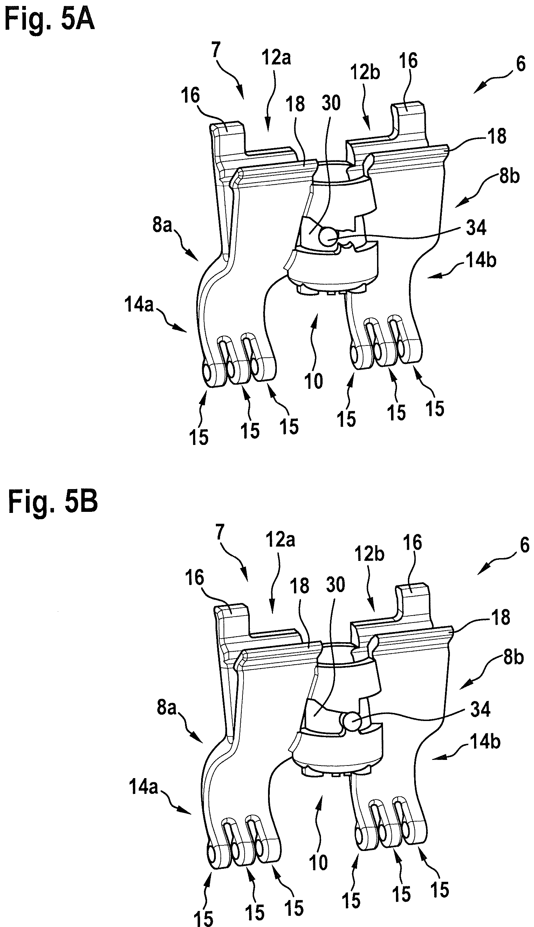

Figure 5A depicts a perspective view of an aircraft passenger service unit fixing element 6 according to an exemplary embodiments of the invention in an unlocked state. Figure 5B depicts the aircraft passenger service unit fixing element 6, depicted in Figure 5A, in a locked state.

The aircraft passenger service unit fixing element 6 comprises a clamping body 7, including two clamps 8a, 8b and a central lock portion 10, which is arranged between the two clamps 8a, 8b, so that the two clamps 8a, 8b are arranged on opposite sides of the central lock portion 10. The aircraft passenger service unit fixing element 6 further comprises a locking element 30, which is arranged in the central lock portion 10. The central lock portion 10 and the locking element 30 both have a substantially cylindrical shape, and the locking element 30 is rotatable in the central lock portion 10.

The clamping body 7, including the two clamps 8a, 8b and the central lock portion 10, may be formed integrally. The central lock portion 10 and the two clamps 8a, 8b may in particular be formed from a homogeneous material.

The locking element 30 may be made from the same material as the clamping body 7. Alternatively, it may be made from a different material.

The clamping body 7 and/or the locking element 30 may be made from a plastic material, such as PEEK CF30 or filled polyetherimide.

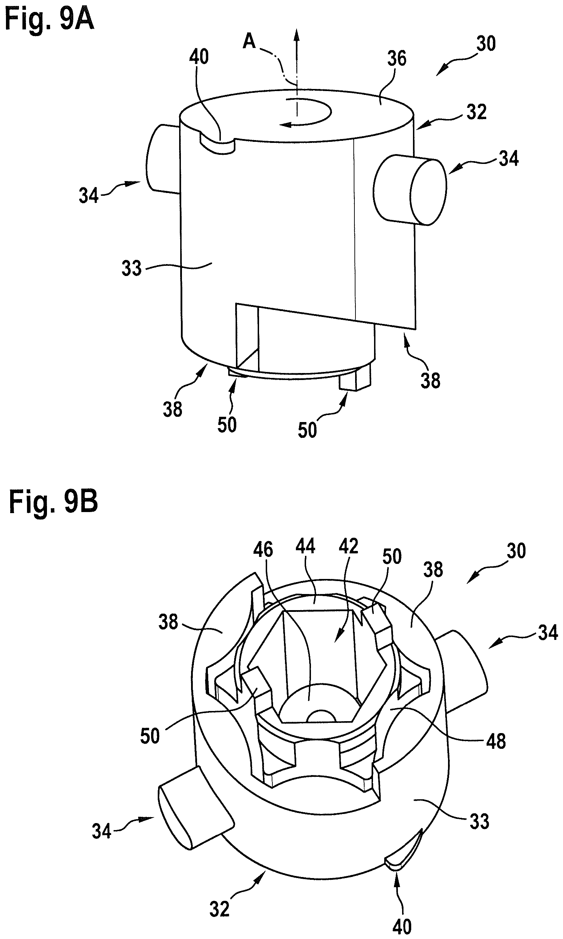

In Figure 5A, the locking element 30 is in an unlocked position. In Figure 5B, the locking element 30 is in a locked position. The structure and the function of the locking mechanism, formed by the central lock portion 10 and the locking element 30, are described in more detail further below with reference to Figures 9A to 11.

Each of the two clamps 8a, 8b comprises a respective coupling portion 14a, 14b, which is configured for being coupled to the passenger service unit 2, as it is depicted in Figures 3 and 4.

In the exemplary embodiment of an aircraft passenger service unit fixing element 6 depicted in Figures 5A and 5B, each coupling portion 14a, 14b comprises three fingers 15, extending parallel to each other. A respective fastening opening is formed in each of the fingers 15. The fastening openings, formed in the fingers 15, are coaxially arranged along a common axis, allowing a cylindrical fastening rod, bolt or screw 17 to extend through the fastening openings for fixing the coupling portions 14a, 14b of the aircraft passenger service unit fixing element 6 to a passenger service unit 2, as it is depicted in Figures 3 and 4.

A second end of each of the two clamps 8a, 8b, which is the upper end in the orientation of the aircraft passenger service unit fixing element 6 depicted in Figures 3 to 5B, is formed as a clamping portion 12a, 12b, which is configured for being clamped to the support member 4, as it is depicted in Figures 3 and 4.

Each clamping portion 12a, 12b comprises two clamp arms 16, 18 that are elastically movable with respect to each other between a clamped configuration, in which the support member 4 is clampable between the two clamp arms 16, 18, and a released configuration, in which the clamping portions 12a, 12b of the clamps 8a, 8b are detachable from the support member 4.

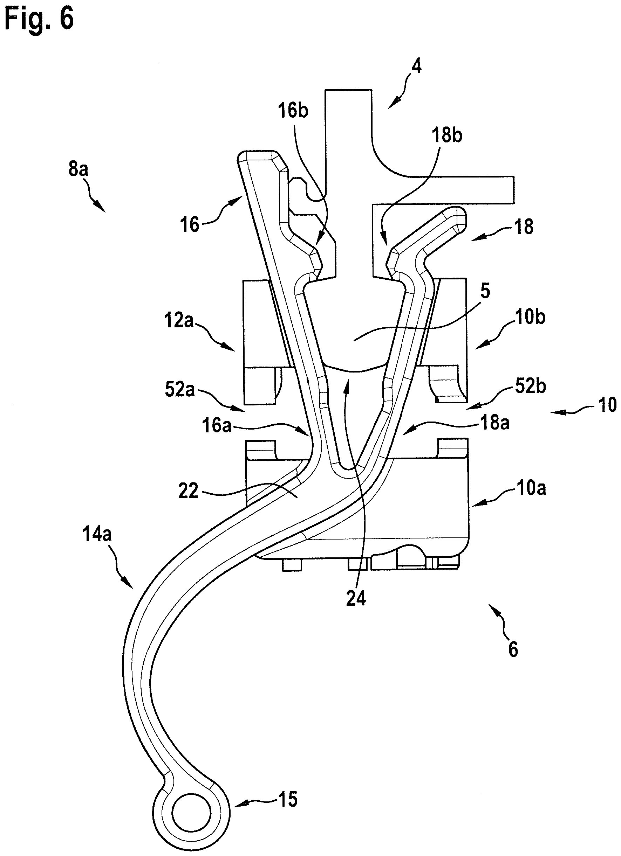

Figure 6 depicts an enlarged side view of a clamp 8a of a passenger service unit fixing element 6 according to an exemplary embodiment of the invention, when clamped to a support member 4. In order to enhance the clarity of illustration, the locking element 30 is not depicted in Figure 6.

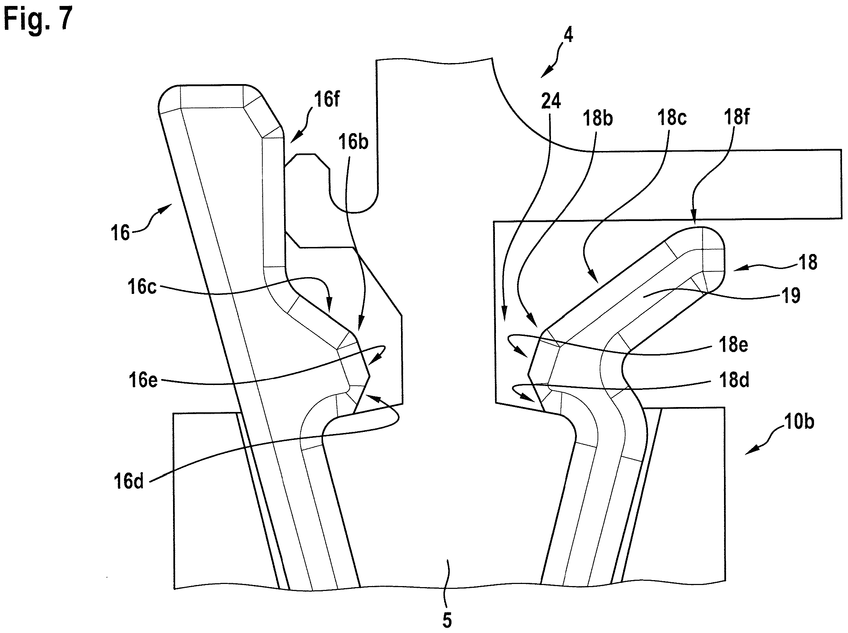

Figure 7 depicts an even further enlarged side view of the upper portion of the clamp 8a, as depicted in Figure 6, when clamped to the support member 4.

The coupling portion 14a has a curved shape, with the fingers 15, only one of which is visible in Figure 6, being formed at a lower end of the coupling portion 14a.

At its upper end, which is opposite to the fingers 15, the coupling portion 14a transitions into a base 22 of the clamping portion 12a. The two clamp arms 16, 18, which extend from the base 22 in a direction that is opposite to the coupling portion 14a, form a v-shaped structure. The base 22 may also be viewed as a joint portion of the v-shaped structure of the two clamp arms 16, 18.

The two clamp arms 16, 18 and the base 22 are formed, such that the two clamp arms 16, 18 are elastically movable with respect to each other for widening a gap 24 that is formed between the two clamp arms 16, 18.

The gap 24, which is formed between the two clamp arms 16, 18, may be widened by moving the two clamp arms 16, 18 away from each other. This widening fo the gap 24 allows for applying the two clamp arms 16, 18 to the support member 4, in particular for sliding the two clamp arms 16, 18 onto a coupling part 5 of the support member 4.

After the most narrow portion of the gap 24 between the two clamp arms 16, 18 has passed the widest portion of the coupling part 5 of the support member 4, the elasticity of the clamp arms 16, 18 urges the two clamp arms 16, 18 towards each other, narrowing the gap 24 and clamping the two clamp arms 16, 17 to the coupling part 5 of the support member 4, as it is depicted in Figures 6 and 7.

An engagement protrusion 16b, 18b is formed on each of the clamp arms 16, 18. Each engagement protrusion 16b, 18b faces towards the other clamp arm 16, 18, thereby providing a narrow portion of the gap 24 between the two clamp arms 16, 18.

The engagement protrusions 16b, 18b engage with the coupling part 5 of the support member 4, when the clamp arms 16, 18 have been moved into an engaged position on the coupling part 5 of the support member 4. The clamped configuration of the two clamp arms 16, 18 is depicted in Figure 6. The engagement protrusions 16b, 18b provide for a positive fit with respect to the coupling part 5 of the support member 4 in the clamped configuration of the two clamp arms 16, 18.

For releasing the clamp arms 16, 18 from the support member 4, the clamp arms 16, 18 are elastically bent away from each other, thus widening the gap 24 between the clamp arms 16, 18 and allowing the engagement protrusions 16b, 18b to slide along the peripheral surface of the coupling part 5, when the clamp arms 16, 18 are moved downwards, away from the support member 4.

For a particularly effective elasticity, at least one of the clamp arms 16, 18 may comprise an elastic bending portion 16a, 18a, which has a higher elasticity than other portions of the respective clamp arm 16, 18. The elastic bending portion 16a, 18a may be thinner than the other portions of the respective clamp arm 16, 18. Alternatively or additionally, the elastic bending portion 16a, 18a may be made from a different, more elastic, material than the other portions of the respective clamp arm 16, 18. The elastic bending portion 16a, 18a may be located between the base 22 and a distal upper end of the respective clamp arm 16, 18. The elastic bending portion 16a, 18a may in particular be formed closer to the base 22 than to the distal upper end of the respective clamp arm 16, 18. More in particular, the elastic bending portion 16a, 18a may be formed in proximity to the base 22.

Each of the clamp arms 16, 18 comprises an inclined guide surface 16c, 18c, as is depicted in Figure 7, which is formed on the side of the engagement protrusion 16b, 18b facing away from the base 22. In the exemplary embodiment depicted in the figures, the clamp arm 18, shown on the right side of Figures 6 and 7, comprises an inclined section 19 that is formed on the side of the engagement protrusion 16b, 18b opposite to the base 22. Said inclined section 19 is inclined away from the other clamp arm 16 for widening the gap 24 between the two clamp arms 16, 18 towards the distal ends of the two clamp arms 16, 18.

In combination, the inclined guide surfaces 16c, 18c of the two clamp arms 16, 18 form a funnel, with which the two clamp arms 16, 18 can be spread. The interaction of the inclined guide surfaces 16c, 18c of the two clamp arms 16, 18 with the coupling part 5 of the support member 4 widens the gap 24 between the two clamp arms 16, 18, when the clamping portion 12a is slid onto the coupling part 5 of the support member 4. Widening the gap 24 between the two clamp arms 16, 18 via the sliding motion of the respective clamping portion 12a, 12b provides for a highly convenient way of applying the clamping portions 12a, 12b to the coupling part 5 of the support member 4.

An inclined rest surface 16d, 18d, which faces the gap 24, is formed at a lower portion of each of the engagement protrusions 16b, 18b, respectively. Each rest surface 16d, 18d is formed between a respective front surface 16e, 18e of the engagement protrusion 16b, 18b and that portion of the engagement protrusion 16b, 18b that is in contact with the coupling part 5 of the support member 4, when the two clamp arms 16, 18 are in the clamped configuration. Each rest surface 16d, 18d is inclined with respect to the adjacent front surface 16e, 18e of the engagement protrusion 16b, 18b, so that an obtuse angle is formed between the rest surface 16d, 18d and the adjacent front surface 16e, 18e of each engagement protrusion 16b, 18b, respectively. Each rest surface 16d, 18d is also inclined with respect to that portion of the engagement protrusions 16b, 18b that is adjacent to the rest surface 16d, 18d and that is in contact with the support member 4, when the support member 4 is clamped between the two clamp arms 16, 18.

The rest surfaces 16d, 18d may be concave, as it is depicted in Figures 6 and 7.

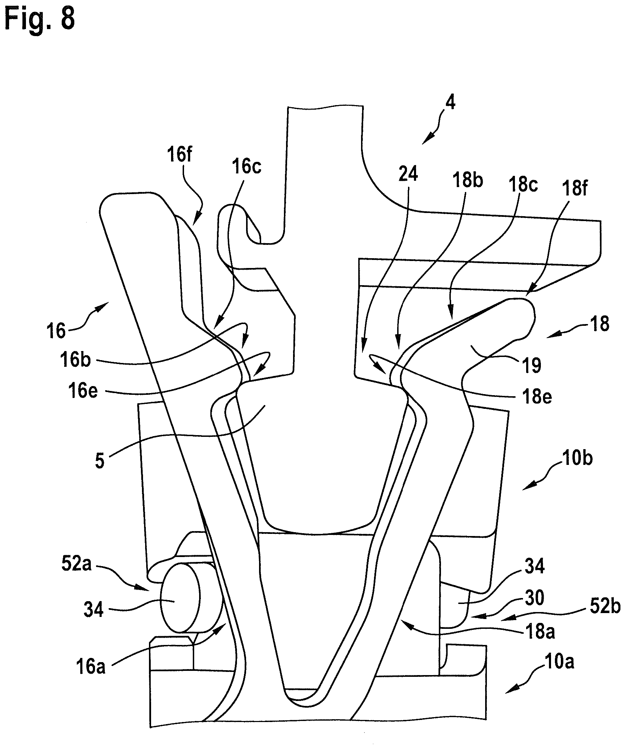

When the aircraft passenger service unit fixing element 6 is arranged in an intermediate state, in which the clamping portion 12a is partially engaged with the coupling part 5 of the support member 4, the rest surfaces 16d, 18d may engage with upper edges of the coupling part 5 of the support member 4, as it is depicted in Figure 8. Such an intermediate state, in which the rest surfaces 16d, 18d of the engagement protrusion 16b, 18b engage with upper edges of the coupling part 5 of the support member 4 may help in releasing the clamp 8a from the support member 4.

In Figure 8, the central lock portion 10 of the aircraft passenger service unit fixing element 6 is also depicted. Said central lock portion 10 comprises a first part 10a, which is a lower part 10a of the central lock portion 10 in the orientation depicted in Figure 8 and which is formed integrally with the base 22. The central lock portion 10 further comprises a second part 10b, which is an upper part 10b in the orientation depicted in Figure 8 and which is formed integrally with the two clamp arms 16, 18.

An opening with two receptacles 52a, 52b is formed between the first and second parts 10a, 10b of the central lock portion 10.

Each of the two clamp arms 16, 18 further comprises a respective abutment portion 16f, 18f that abuts against a corresponding abutment section of the support member 4, when the clamping portion 12a is clamped onto the coupling part 5 of the support member 4, as depicted in Figures 6 and 7.

The engagement of the abutment portions 16f, 18f with the support member 4 may help in establishing a well-defined position of the respective clamp arm 16, 18 with respect to the support member 4, when the clamping portion 12a is clamped onto the coupling part 5 of the support member 4. This may contribute to a convenient installation of the passenger service unit fixing element 6. It may further help to achieve a particularly stable mechanical engagement between the passenger service unit fixing element 6 and the support member 4.

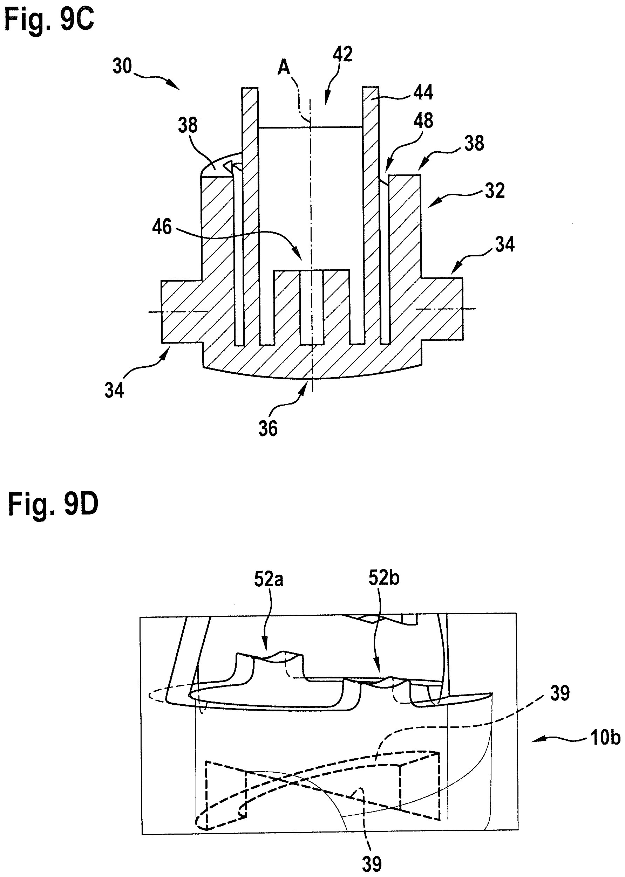

Figure 9A depicts a perspective view of a locking element 30 of a passenger service unit fixing element 6 according to an exemplary embodiment of the invention. Figure 9B depicts a perspective view of the locking element 30, depicted in Figure 9A, from an opposite side, which is the lower side in Figure 9A. Figure 9C depicts a cross-sectional view of the locking element 30 of Figures 9A and 9B, shown in the upside-down orientation, as compared to Figure 9A.

The locking element 30 comprises a substantially cylindrical main body 32, extending along an axis A, and two locking protrusions 34 that extend radially from the peripheral surface 33 of the main body 32, perpendicular to the axis A. In particular, the two locking protrusions 34 extend from two positions on the peripheral surface 33 of the main body 32 that are spaced apart by 180°, so that the two locking protrusions 34 extend coaxially along a common line, which is oriented perpendicular to the axis A of the main body 32.

The main body 32 comprises a dome shaped end face 36, which is the upper end face of the main body 32 in the orientation depicted in Figure 9A.

Two inclined helical surfaces 38 are formed on the opposite end face of the main body 32, which is the lower end face of the main body 32 in the orientation depicted in Figure 9A and the upper end face in the orientation depicted in Figures 9B and 9C.

Figure 9D depicts a semi-transparent enlarged view of the second part 10b of the central lock portion 10 of the clamping body 7. Two inclined helical surfaces 39 are formed in the second part 10b of the central lock portion 10 in a configuration that corresponds to the configuration of the inclined helical surfaces 38 that are formed on the end face of the main body 32.

When the locking element 30 is arranged in the central lock portion 10, as depicted in Figures 5A and 5B, the inclined helical surfaces 38 of the main body 32 engage with the corresponding inclined helical surfaces 39, formed in the first part 10a of the central lock portion 10.

As a result of the engagement of the inclined helical surfaces 38, 39, the locking element 30 moves linearly along its axis A, when it is rotated around said axis A. Depending on the direction of rotation, the locking element 30 will move either upwards or downwards with respect to the first part 10a of the central lock portion 10.

The locking element 30 further comprises two spreading protrusions 40 that extend radially form the outer peripheral surface 33 of the main body 32. The spreading protrusions 40 may in particular extend from a portion of the outer peripheral surface 33 adjacent to the dome shaped end face 36 of the main body 32.

The two spreading protrusions 40 extend from positions on the peripheral surface 33 of the main body 32 that are spaced apart by 180° along the outer peripheral surface 33 of the main body 32. As a result, the two spreading protrusions 40 may extend along a common line that is oriented perpendicular to the axis A of the main body 32.

The two spreading protrusions 40 may in particular be arranged along a common line that is oriented perpendicular to the line on which the two locking protrusions 34 are arranged. In other words, the spreading protrusions 40 and the locking protrusions 34 may be spaced apart from each other by an angle of 90° along the outer circumference of the main body 32.

The locking element 30 further comprises an axial opening 42 that is visible in Figures 9B and 9C. The axial opening 42 is configured for receiving a tool that may be employed for rotating the locking element 30 around its axis A.

For limiting the introduction of the tool into the axial opening 42 along the axial direction, an end stop 46 is formed on the inner end face of the axial opening 42.

The axial opening 42 has a polygonal cross-section that is centered around the axis A. The axial opening 42 may in particular have a hexagonal cross-section, as depicted in Figure 9. In alternative embodiments, which are not explicitly depicted in the figures, the axial opening 42 may, for example, have a rectangular cross-section or an octagonal cross-section.

The axial opening 42 is defined by an elastic circumferential wall 44, extending along the circumferential periphery of the axial opening 42. In order to prevent the locking element 30 from being damaged, when an excessive torque is applied via a tool that has been inserted into the axial opening 42, the elastic circumferential wall 44 is configured to elastically deform, when a torque that exceeds a predefined maximum torque limit is exerted by the tool onto the elastic circumferential wall 44.

The elastic circumferential wall 44 is surrounded by a groove 48 that allows the elastic circumferential wall 44 to deform outwards in the radial direction. In the exemplary embodiment depicted in Figure 9B, the groove 48 comprises a plurality of curved groove sections. The ends of each of the curved groove sections are spaced from the central axis A of the main body 32 by a larger distance than a central portion of the respective curved groove section.

In other words, the groove sections have a curvature that is opposite to the curvature of the elastic circumferential wall. The curved groove sections are curved in a concave manner, when viewed from the exterior of the locking element 30, and the curved groove sections are curved in a convex manner, when viewed from the central axis A of the main body 32.

In the exemplary embodiment depicted in Figure 9B, the number of the curved groove sections corresponds to the number of the edges of the elastic circumferential wall 44, defining the axial opening 42. Consequently, since the elastic circumferential wall 44, as depicted in Figure 9B, is a hexagonal wall comprising six edges, the groove 48 comprises six similarly curved groove sections, with each of the curved groove sections corresponding to one of the edges of the elastic circumferential wall 44, respectively.

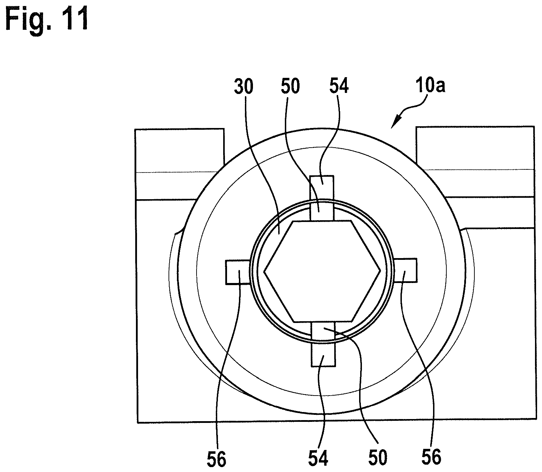

Two indicator protrusions 50 extend from the outer end face of the elastic circumferential wall 44 parallel to the axis A. The indicator protrusions 50 allow for easily identifying the rotational position of the locking element 30. This is shown in Figure 11, which will be discussed further below.

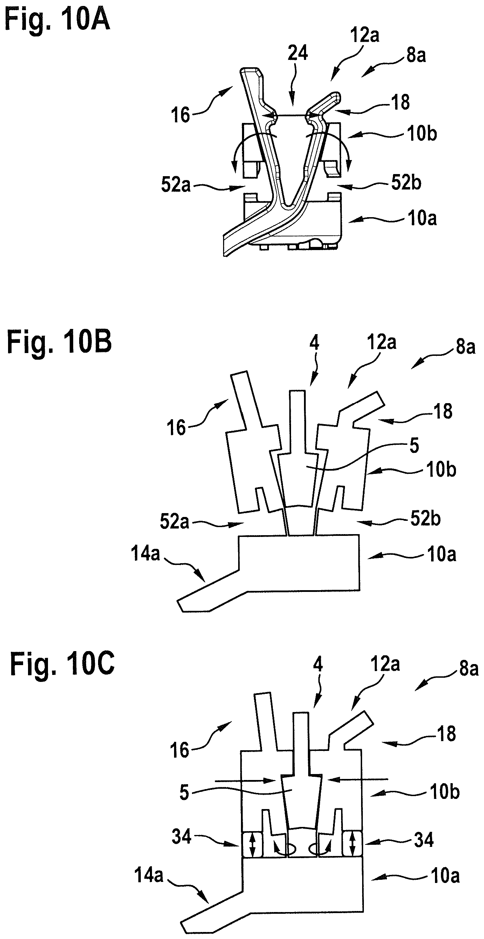

Figures 10A, 10B, and 10C illustrate the cooperation of the two clamp arms 16, 18 and the locking element 30 of an aircraft passenger service unit fixing element 6 according to an exemplary embodiment of the invention for fixing the clamp 8a to a support member 4.

In order to enhance the clarity of the illustration, the locking element 30 is not depicted in Figures 10A and 10B, and only the locking protrusions 34 of the locking element 30 are schematically depicted in Figure 10C. The clamp 8a and the passenger service unit fixing element 6 are depicted only schematically in Figures 10B and 10C, too.

When the locking element 30 is in an unlocked position, in which the locking protrusions 34 do not extend into the receptacles 52a, 52b that are formed between the first and second parts 10a, 10b of the central lock portion 10, the two clamp arms 16, 18 of the clamping portion 12a are spreadable by elastically bending the two clamp arms 16, 18 away from each other. This is schematically indicated by the arrows in Figure 10A.

Bending the two clamp arms 16, 18 away from each other may be supported by the spreading protrusions 40, which are formed on the outer periphery of the locking element 30 (cf. Figures 9A and 9B). The spreading protrusions 40 may abut against the clamp arms 16, 18 and urge the clamp arms 16, 18 away from each other, when the locking element 30 is arranged in an unlocked position between the two clamp arms 16, 18.

Spreading the two clamp arms 16, 18 widens the gap 24 between the two clamp arms 16, 18. This may allow for sliding the clamping portion 12a over the coupling part 5 of a support member 4, as it is depicted in Figure 10B.

When no external force is applied to the clamp arms 16, 18, the elasticity of the two clamp arms 16, 18 causes the two clamp arms 16, 18 to move towards each other, narrowing the gap 24 between the two clamp arms 16, 18 and clamping the clamping portion 12a to the coupling part 5 of the support member 4, as it is depicted in Figures 6, 7 and 10C.

For securely fixing the clamp 8a to the support member 4, the locking element 30, which is arranged in the central lock portion 10 between the two clamp arms 16, 18, may be rotated around its axis A from an unlocked position, as it is depicted in Figure 5A, into the locked position, which is depicted in Figure 5B. When the locking element 30 is in the locked position, the locking protrusions 34, which are formed on the outer periphery of the locking element 30 (cf. Figures 9A and 9B), extend into the receptacles 52a, 52b, which are formed between the first and second parts 10a, 10b of the central lock portion 10, as depicted in Figures 5B and 10C.

The locking element 30 may in particular be rotated by 90° or by less than 90° from the unlocked position into the locked position. The locking element 30 may be rotated using a tool, such as a hexagon key, which is temporarily inserted into the axial opening 42 formed in the locking element 30.

When the locking element 30 is in the locked position, the spreading protrusions 40 are in positions in which they do not spread the clamp arms 16, 18. Further, the locking protrusions 34, which extend into the receptacles 52a, 52b, when the locking element 30 is in the locked position, prevent the two clamp arms 16, 18 from being bent outwards. This securely fixes the clamping portion 12a of the clamp 8a to the coupling part 5 of a support member 4.

For releasing the aircraft passenger service unit fixing element 6 from the support member 4, the locking element 30 is rotated in the opposite direction from the locked position into an unlocked position. When the locking element 30 is in an unlocked position, the locking protrusions 34 are not positioned in the receptacles 52a, 52b of the central lock portion 10.

After the locking protrusions 34 have been moved out of the receptacles 52a, 52b, the clamp arms 16, 18 can be elastically spread for widening the gap 24 between the clamp arms 16, 18. Widening the gap 24 between the clamp arms 16, 18 allows for removing the clamping portion 12a from the coupling part 5 of the support member 4.

The spreading of the clamp arms 16, 18 may be supported by the spreading protrusions 40, formed on the outer periphery of the main body 32 of the locking element 30. The spreading protrusions 40 may urge the clamp arms 16, 18 away from each other for widening the gap 24 between the clamp arms 16, 18, when the locking element 30 is rotated from the locked position into an unlocked position.

Due to the engagement of the inclined helical surfaces 38, formed at the bottom of the locking element 30, with corresponding helical surfaces, formed in the first part 10a of the central lock portion 10, the locking element 30 is moved linearly upwards along the axis A, when it is rotated from the locked position into an unlocked position.

This linear movement of the locking element 30 may cause the dome shaped upper end face 36 of the main body 32 to urge against a bottom surface of the coupling part 5 of the support member 4, which faces the locking element 30. This may urge the aircraft passenger service unit fixing element 6 away from the support member 4, supporting the release of the clamp arms 16, 18 from the support member 4.

Releasing the clamping portion 12a from the support member 4 may include moving the clamping portion 12a into an intermediate state, as it is depicted in Figure 8, in which the rest surfaces 16d, 18d, which are formed on the clamping arms 16, 18, engage with the upper edges of the coupling part 5 of the support member 4.

The processes of fixing and releasing the clamp 8a to and from the support member 4, which have been described before with reference to the clamping portion 12a of the first clamp 8a, similarly apply to the clamping portion 12b of the second clamp 8b, which is not explicitly depicted in Figures 10A to 10C.

Figure 11 depicts a plan view of the first part 10a of the central lock portion 10, viewed from the coupling portions 14a, 14b, i.e. viewed from below in the orientation of the aircraft passenger service unit fixing element 6, as depicted in Figures 5A and 5B.

In Figure 11, the locking element 30 is in the locked position. This is indicated by the indicator protrusions 50 of the locking element 30 being aligned with corresponding locking markers 54, which are formed on the bottom surface of first part 10a of the central lock portion 10.

For indicating an unlocked position of the locking element 30, unlocking markers 56 are formed on the bottom surface of first part 10a of the central lock portion 10. The indicator protrusions 50 of the locking element 30 will be aligned with the unlocking markers 56, indicating that the locking element 30 is in the unlocked state, when the locking element 30 has been rotated by 90° from the locked position into the unlocked position.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention not be limited to the particular embodiment disclosed, but that the invention include all embodiments falling within the scope of the following claims.

## Claims

1. Passenger service unit fixing element (6) for releasably fixing a passenger service unit (2) in a passenger cabin (102) of an aircraft (100),
the passenger service unit fixing element (6) comprising a clamping body (7) and a locking element (30) that is rotatably arranged in the clamping body (7);
wherein the clamping body (7) comprises at least one clamp (8a, 8b) and wherein each of the at least one clamp (8a, 8b) comprises:
a coupling portion (14a, 14b) for being coupled to the passenger service unit (2); and
a clamping portion (12a, 12b) for being clamped to a support member (4) that is provided in the passenger cabin (102), the clamping portion (12a, 12b) comprising two clamp arms (16, 18) that are elastically movable with respect to each other between a clamped configuration, in which the support member (4) is clampable between the two clamp arms (16, 18), and a released configuration, in which the clamping portion (12a, 12b) is detachable from the support member (4); and
wherein the locking element (30) is rotatable between a locked position, in which the locking element (30) locks the clamp arms (16, 18) in the clamped configuration, and an unlocked position, in which the locking element (30) allows the clamp arms (16, 18) to move from the clamped configuration into the released configuration.

2. Passenger service unit fixing element (6) according to claim 1,
wherein the clamping body (7) comprises a lock portion (10) that is coupled to the two clamp arms (16, 18) and that comprises two receptacles (52), which are formed between a first part (10a) of the lock portion (10) and a second part (10b) of the lock portion (10); and
wherein the locking element (30) comprises two locking protrusions (34), extending radially from the locking element (30) into the two receptacles (52) for locking the two clamp arms (16, 18) in the clamped configuration, when the locking element (30) is in the locked position.

3. Passenger service unit fixing element (6) according to claim 2,
wherein the locking element (30) comprises at least one first inclined helical surface (38);
wherein at least one corresponding second inclined helical surface (39) is formed at the lock portion (10); and
wherein the at least one first inclined helical surface (38) and the at least one second inclined helical surface (39) engage with each other for moving the locking element (30) along an axial direction, when the locking element (30) is rotated.

4. Passenger service unit fixing element (6) according to claim 3, wherein the locking element (30) comprises an end face (36) that is configured to abut against the support member (4) for urging the locking element (30) away from the support member (4), when the locking element (30) is rotated from the locked position into the unlocked position; wherein the end face (36) is in particular a dome shaped end face (36).

5. Passenger service unit fixing element (6) according to any of the preceding claims, wherein the locking element (30) comprises at least one spreading protrusion (40), extending radially from the locking element (30) for spreading the two clamp arms (16, 18) from the clamped configuration into the released configuration, when the locking element (30) is rotated into the unlocked position.

6. Passenger service unit fixing element (6) according to any of the preceding claims,
wherein at least one of the two clamp arms (16, 18) comprises at least one guide surface (16c, 18c) that is configured for spreading the two clamp arms (16, 18), when the clamping portion (12a, 12b) is slid onto the support member (4); and/or
wherein at least one of the two clamp arms (16, 18) comprises an engagement protrusion (16b, 18b) for engaging with a coupling part (5) of the support member (4), when the clamping portion (12a, 12b) is in the clamped configuration; and/or
wherein at least one of the two clamp arms (16, 18) comprises a rest surface (16d, 18d) for engaging with an edge of the support member (4), when the clamping portion (12a, 12b) is partially engaged with the support member (4).

7. Passenger service unit fixing element (6) according to any of the preceding claims,
wherein at least one of the two clamp arms (16, 18) comprises an abutment portion (16f, 18f) that abuts against a corresponding abutment portion of the support member (4), when the clamping portion (12a, 12b) is clamped to the support member (4); and/or
wherein at least one of the two clamp arms (16, 18) comprises an S-shaped portion.

8. Passenger service unit fixing element (6) according to any of the preceding claims,
wherein at least one of the two clamp arms (16, 18) comprises an elastic bending portion (16a, 18a) that is more flexible than other portions of the at least one of the two clamp arms (16, 18);
wherein the elastic bending portion (16a, 18a) has in particular a smaller cross-section than the other portions of the at least one of the two clamp arms (16, 18) and/or wherein the elastic bending portion (16a, 18a) is in particular made from a different material than the other portions of the at least one of the two clamp arms (16, 18).

9. Passenger service unit fixing element (6) according to any of the preceding claims,
wherein the clamping body (7) is integrally formed as a single element; wherein the clamping body (7) is in particular formed from a homogeneous material; and/or wherein the clamping body (7) and the locking element (30) are made of the same material; and/or
wherein the clamping body (7) and/or the locking element (30) are made of a plastic material, such as PEEK CF30 or filled polyetherimide.

10. Passenger service unit fixing element (6) according to any of the preceding claims,
wherein the locking element (30) comprises an axial opening (42) for receiving a tool for rotating the locking element (30);
wherein the axial opening (42) has in particular a polygonal cross-section, more in particular a rectangular cross-section or a hexagonal cross-section.

11. Passenger service unit fixing element (6) according to claim 10 ,
wherein the axial opening (42) is defined by an elastic circumferential wall (44) that extends along the circumferential periphery of the axial opening (42);
wherein the elastic circumferential wall (44) is in particular configured to elastically deform when a torque exceeding a predefined limit is exerted by the tool onto the locking element (30).

12. Passenger service unit fixing element (6) according to claim 11,
further comprising a groove (48) that at least partially surrounds the elastic circumferential wall (44) and that allows the elastic circumferential wall (44) to deform in a radial direction;
wherein the groove (48) in particular comprises a plurality of curved groove sections, with the ends of each of the curved groove sections being curved opposite to the elastic circumferential wall (44).

13. Aircraft (100), comprising a passenger cabin (102) that comprises:
at least one passenger seat (80);
at least one support member (4) extending above the at least one passenger seat (80);
at least one passenger service unit (2) that is arranged above the at least one passenger seat (80); and
at least one passenger service unit fixing element (6) according to any of the preceding claims that fixes the at least one passenger service unit (2) to the at least one support member (4).

14. Method of fixing a passenger service unit (2) to a support member (4) provided in a passenger cabin (102) of an aircraft (100), wherein the method comprises:
providing at least one passenger service unit fixing element (6) according to any of claims 1 to 12;
for each of the at least one passenger service unit fixing element (6), coupling the passenger service unit (2) to the coupling portion (14a, 14b) of the respective passenger service unit fixing element (6);
for each of the at least one passenger service unit fixing element (6), bringing the locking element (30) into its unlocked position;
for each of the at least one passenger service unit fixing element (6), attaching the clamping portion (12a, 12b) of the respective passenger service unit fixing element (6) to the support member (4); and
for each of the at least one passenger service unit fixing element (6), rotating the locking element (30) from the unlocked position into the locked position for securely fixing the clamping portion (12a, 12b) to the support member (4).

15. Method of releasing a passenger service unit (2) that is mounted to a support member (4) provided in a passenger cabin (102) of an aircraft (100) by at least one passenger service unit fixing element (6) according to any of claims 1 to 12, wherein the method comprises:
for each of the at least one passenger service unit fixing element (6), rotating the locking element (30) of the respective passenger service unit fixing element (6) from the locked position into the unlocked position; and
for each of the at least one passenger service unit fixing element (6), releasing the two clamp arms (16, 18) from the support member (4);
wherein releasing the two clamp arms (16, 18) from the support member (4) in particular includes spreading the two clamp arms (16, 18) from the clamped configuration into the released configuration.
